(19) Europäisches Patentamt
European Patent Office
Office européen des brevets

(11) **EP 3 343 196 A1**

(12) **EUROPÄISCHE PATENTANMELDUNG**

(43) Veröffentlichungstag:
**04.07.2018 Patentblatt 2018/27**

(51) Int Cl.:
***G01M 15/02*** *(2006.01)*    ***G01M 17/007*** *(2006.01)*

(21) Anmeldenummer: **17204253.3**

(22) Anmeldetag: **29.11.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **30.11.2016 DE 102016223865**

(71) Anmelder: **AIP GmbH & Co. KG**
**87490 Haldenwang (DE)**

(72) Erfinder:
• **Heubuch, Alexander**
  **D-87490 Haldenwang (DE)**
• **Knestel, Anton**
  **D-87496 Hopferbach (DE)**

(74) Vertreter: **MERH-IP Matias Erny Reichl Hoffmann**
**Patentanwälte PartG mbB**
**Paul-Heyse-Strasse 29**
**80336 München (DE)**

(54) **VERFAHREN ZUM SIMULIEREN VON KRAFTFAHRZEUGSTRASSENTESTS AUF PRÜFSTÄNDEN**

(57) Die vorliegende Erfindung betrifft ein Verfahren zum Simulieren von Kraftfahrzeug-Straßentests auf Rollenprüfstände (Road to Lab), (insbesondere von Straßentests die im Rahmen der RDE-Verordnung vorgeschrieben sind) mit den Schritten Aufzeichnen von Messwerten des Kraftfahrzeugs, enthaltend zumindest einen die Geschwindigkeit des Kraftfahrzeugs repräsentierenden Wert, über eine vorbestimmte Zeitdauer während des Straßentests, Ermitteln eines Lastzustands des Antriebsmotors über die vorbestimmte Zeitdauer, Durchführen des Prüfstandslaufs zum Simulieren des Kraftfahrzeug-Straßentests derart, dass als Sollwerte für den Prüfstandslauf der ermittelte Lastzustand dem Kraftfahrzeug und der die Geschwindigkeit während des Straßentests repräsentierende Wert dem Prüfstand vorgegeben (eingeprägt) werden.

NEFZ (Energieverbrauch gemäß RL 70/220/EWG)

Fig. 1

EP 3 343 196 A1

**Beschreibung**

Die Erfindung betrifft ein Verfahren zum Simulieren von Kraftfahrzeugstraßentests auf Rollenprüfständen, Antriebsstrangprüfständen und/oder Motorprüfständen (Road to Lab/Road to Rig). Die betreffenden Kraftfahrzeugstraßentests sind insbesondere die, welche im Rahmen der RDE-Verordnung vorgeschrieben sind. RDE steht hierbei für Real Driving Emissions.

Um für neue Kraftfahrzeuge eine Straßenzulassung zu erhalten, werden die Probanden bei der Typengenehmigungsprüfung auf einen Abgasrollenprüfstand gefahren. Dort wird das emittierte Abgas gesammelt und ausgewertet. Das Fahrprofil wird dabei dem Fahrer von einem sogenannten Fahrerleitsystem vorgegeben. Neben dem eigentlichen Fahrprofil werden dem Fahrer auch Toleranzen vorgegeben. Bei einem Verletzen der vorgegebenen Toleranzen wird der Test ungültig. Dadurch ergeben sich für den Applikator recht einfache abgasrelevante Lastpunkte, die er für die Bedatung der Steuergeräte braucht.

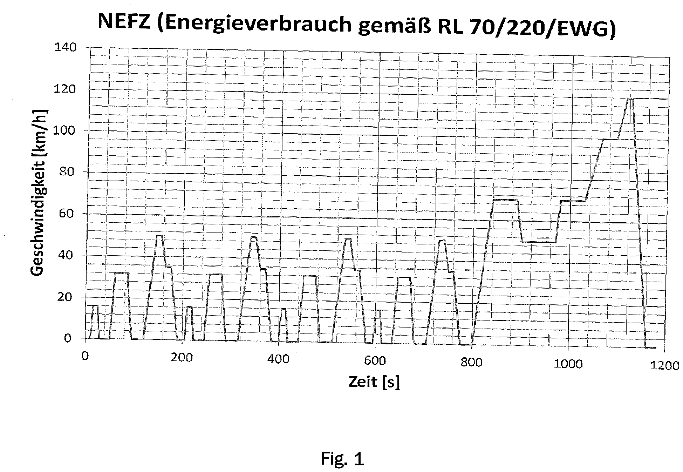

In der Figur 1 ist ein sogenannter NEFZ (neuer europäischer Fahrzyklus) gezeigt. Hierbei ist zu sehen, dass der Fahrzyklus bei etwa 1.200 Sekunden (20 Minuten) endet. Zukünftig soll der europäische NEFZ durch den weltweit gültigen WLTP (Worldwide Harmonized Light Duty Test Procedure) ersetzt werden. Der neue Zyklus ist nicht nur länger als der NEFZ-Zyklus, sondern auch anspruchsvoller. Die abgasrelevanten Lastpunkte sind höher als beim WLTP-Zyklus. Dadurch erwartet man sich realistischere Verbräuche und Abgaswerte.

Die Abgasgrenzwerte sind in den letzten Jahren nach und nach deutlich gesenkt werden, ohne dass die Stickoxidbelastungen beispielsweise in den Innenstädten entsprechend gesunken wären. Aus diesem Grund hat der Gesetzgeber zusätzlich zu den vorgenannten Rollentests eine Straßenfahrt vorgeschrieben. Bei diesem RDE (Real Drive Emission)-Test werden während der Straßenfahrt mit einem PEMS (Portable Emission Measurement System)-Gerät die Abgasmasse und die emittierten Schadstoffe gemessen.

Bei diesen Straßentests kommt noch einmal eine Vielzahl neuer Einflussparameter hinzu. Die reale Straßenfahrt ist nicht nur eben und gerade, sondern auch bergig und kurvig. Des Weiteren kann die Fahrbahn rau oder glatt, nass oder trocken sein. Auch die Temperaturen und die Feuchte der Fahrbahn und der Ansaugluft können gegenüber dem Labor stark differieren.

Während beim Labortest dem Fahrer oder Roboter bezüglich der vorgegebenen Geschwindigkeit enge Toleranzen gesetzt sind, hat der Fahrer bei einem RDE-Test viel mehr Freiheiten und muss sich zudem dem Verkehr anpassen. Daher wird jeder RDE-Test ein Unikat sein. Bei einem Fahrversuch auf der Straße stehen den Entwicklern daher nur begrenzte technische Möglichkeiten zur Verfügung, die innermotorischen Vorgänge zu erfassen und zu ändern bzw. anzupassen.

Es besteht daher der Wunsch den auf der Straße durchgeführten Test im Labor zu wiederholen. Bei einem Abgasrollenprüfstand kann dazu während des RDE-Tests die Geschwindigkeit aufgezeichnet werden. Diese Geschwindigkeit wird dann im Labor durch einen Fahrer oder einen Roboter bestmöglichst nachgefahren. Über ein GPS-System wird außerdem der Höhenverlauf beim RDE-Test mit aufgezeichnet. Auch dieser Höhenunterschied kann durch den Fahrkurvengeber in eine Steigung oder ein Gefälle auf dem Rollenprüfstand umgerechnet werden. Allerdings ist die vertikale Auflösung der handelsüblichen GPS-Systeme sehr beschränkt. Überdies kommt es in der Stadt, in Tunneln, in Waldstücken immer wieder zu Abschattungen der Satelliten. Dadurch ist die Positionserkennung und damit auch die Höhenerkennung ungenau oder fällt zeitweise sogar ganz aus.

Abgasrollenprüfstände werden normalerweise im sogenannten Fahrwiderstandsmodus betrieben. Hierbei gilt:

$$F = m \cdot a + c \cdot v^2 + b \cdot v + a + m \cdot sin(\alpha)$$

wobei m die Fahrzeugmasse, v die Geschwindigkeit und a, b und c die Rollwiderstände darstellen. Über dem Term "m · sin($\alpha$)" wird die Hangab- oder Hangauftriebskraft berücksichtigt.

Zusammenfassend stellen die RDE-Tests unter realen Fahrbedingungen auf der Straße die Motorenentwicklung vor die Herausforderung, dass situative Umgebungsbedingungen (z. B. Temperatur, Verkehr, Feuchtigkeit, Fahrverhalten, usw.) keine reproduzierbare Testumgebung darstellen. Konstant abbildbare Umgebungsbedingungen sind jedoch maßgeblich, um Bauteil- und Softwareeinflüsse auf das Emissionsverhalten gezielt zu untersuchen. Durch steigende Kosten, einer ansteigenden Variantenanzahl und kürzere geforderte Entwicklungszeiten ist eine Erprobung auf Prüfständen weiterhin essentiell.

Ein Nachteil der Aufzeichnung der Geschwindigkeit und der Höhe bei Verwendung eines GPS-Systems besteht beispielsweise in einer gewissen Ungenauigkeit in der Aufzeichnung der realen Bedingungen, wodurch eine reproduzierbare Testumgebung nur sehr schwierig dargestellt werden kann.

Es ist daher eine Aufgabe der Erfindung ein hochgenaues Verfahren zum Simulieren von Kraftfahrzeugstraßentests auf Prüfständen zu realisieren.

Die Aufgabe wird gemäß den Merkmalen der unabhängigen Patentansprüche gelöst. Die abhängigen Patentansprüche betreffen vorteilhafte Ausführungsformen und Weiterentwicklungen der Erfindung.

Erfindungsgemäß können während des Kraftfahrzeugstraßentests (RDE-Test) Messwerte des Kraftfahrzeugs aufgezeichnet werden. Diese Messwerte enthalten beispielsweise zumindest einen die Geschwindigkeit des Kraftfahrzeugs repräsentierenden Wert über eine erste vorbestimmte Zeitdauer. Weiterhin kann der Lastzustand des Antriebsmotors über diese vorbestimmte Zeitdauer ermittelt werden. Anschließend kann ein Prüfstandslauf zum Simulieren des Kraftfahrzeugstraßentests derart durchgeführt werden, dass als Sollwerte für den Prüfstandslauf der ermittelte Lastzustand dem Kraftfahrzeug und eine während des Straßentests aufgezeichnete Geschwindigkeit bzw. der die aufgezeichnete Geschwindigkeit repräsentierende Wert vorgegeben (eingeprägt) werden.

Weiterhin kann auch ein Verfahren zum Simulieren von Kraftfahrzeugstraßentests auf Antriebsstrangprüfständen und/oder Motorprüfständen realisiert werden, wobei zumindest einen die Motordrehzahl des Antriebsmotors repräsentierenden Wert über eine vorbestimmte Zeitdauer während des Straßentests aufgezeichnet wird. Weiterhin wird ein Lastzustand des Antriebsmotors über die vorbestimmte Zeitdauer ermittelt. Zum Simulieren des Kraftfahrzeugstraßentests kann der Prüfstandslauf derart durchgeführt werden, dass als Sollwerte für den Prüfstandslauf der ermittelte Lastzustand dem Antriebsmotor und die während des Straßentests aufgezeichnete Motordrehzahl bzw. der die Motordrehzahl repräsentierende Wert dem Prüfstand als Soll-Drehzahl vorgegeben (eingeprägt) werden.

Dadurch ist es möglich, eine hochgenaue Simulation von Kraftfahrzeugstraßentests (beispielsweise RDE-Tests) auf Prüfständen zu erzielen, wodurch beispielsweise hochgradig reproduzierbare Testumgebungen dargestellt werden können.

Die während des Straßentests aufgezeichneten Messwerte können bspw. in einem Speicher eines PEMS-Geräts gespeichert werden. Diese Messwerte können entsprechend ausgewertet werden, wobei Sollwerte für den Prüfstandslauf ermittelt werden. Diese Sollwerte bzw. Sollwertverläufe über die Zeit können dann dem Prüfstand bzw. der Prüfstandssteuerung (Prüfstandslaufsteuerung) zur Durchführung des Prüfstandslaufs und dem Kraftfahrzeug bzw. dem Antriebsmotor und/oder Motorprüfstand vorgegeben werden. Das Kraftfahrzeug kann hierbei über eine Schnittstelle mit der Prüfstandssteuerung (Prüfstandslaufsteuerung) verbunden werden, so dass die ermittelten Sollwerte für das Kraftfahrzeug übergeben werden können.

Es ist insbesondere von Vorteil, dass der Lastzustand des Antriebsmotors zusätzlich zu der Geschwindigkeit des Kraftfahrzeugs als Sollwert für den Prüfstandslauf verwendet wird. Gleiches gilt für eine Simulation von Kraftfahrzeugstraßentests auf Antriebsstrangprüfständen und/oder Motorprüfständen, wobei dort der Lastzustand zusammen mit der Soll-Drehzahl dem Prüfstand eingeprägt werden.

Dadurch ist es möglich, eine hochgenaue Simulation des Kraftfahrzeug-Straßentests auf den jeweiligen Prüfstand zu realisieren, da beispielsweise die vorgenannten Nacheile einer GPS-Positions- und Höhenerfassung vermieden werden können.

Die Ermittlung des Lastzustands des Antriebsmotors während der Kraftfahrzeug-straßentests und die Verwendung während des Prüfstandslaufs zusammen mit beispielsweise der aufgezeichneten Geschwindigkeit des Kaftfahrzeugs und/oder der aufgezeichneten Motordrehzahl synchron mit dem ermittelten Lastzustand erlaubt diese hochgenaue Simulation und ermöglicht eine hochgradig reproduzierbare Testumgebung darzustellen.

Weiterhin können die erfassten bzw. aufgezeichneten Messwerte die Geschwindigkeit des Kraftfahrzeugs, die Motordrehzahl eines Antriebsmotors, die Schaltstufe eines Getriebes, eine Gaspedalstellung, eine Drosselklappenstellung, einen Kaftstoffdurchsatz und/oder einen Einlassluftdurchsatz des Antriebsmotors enthalten.

Der Lastzustand kann mittels einer Gaspedalstellung, der Drosselklappenstellung, dem Kraftstoffdurchsatz und/oder dem Einlassluftdurchsatz des Antriebsmotors ermittelt werden.

Der Lastzustand kann weiterhin über ein Motordrehmoment ermittelt werden, wobei dieses Motordrehmoment über den Kraftstoffdurchsatz und/oder den Einlassluftdurchsatz des Antriebsmotors ermittelt werden kann.

Die Messwerte können einen Fahrzeugbussystem und/oder einem Motorsteuergerät entnommen werden und in einem Speicher aufgezeichnet werden.

Durch die Ermittlung von mehreren Messwerten kann die Genauigkeit der Simulation erhöht werden. Weiterhin kann durch das Entnehmen der Messwerte aus dem Fahrzeugbussystem und/oder dem Motorsteuergerät auf zusätzliche Sensoren verzichtet werden. Dies kann zudem auch eine Erhöhung der Genauigkeit der zur Verfügung stehenden Messwerte dienen.

Der Lastzustand auf dem Prüfstand während des Prüfstandslaufs kann durch einen Fahrroboter eingesteuert werden. Weiterhin ist es möglich den Lastzustand auf dem Prüfstand während des Prüfstandslaufs durch einen Gaspedalsteller einzusteuern.

Durch das jeweilige Einsteuern des Lastzustands über einen Fahrroboter und/oder über einen Gaspedalsteller kann eine hochgenaue Reproduzierbarkeit erzielt werden.

Weiterhin kann der Lastzustand auf dem Prüfstand während des Prüfstandslaufs durch einen elektrischen Gaspedalsimulator vorgegeben werden. Dadurch wird beispielsweise der Steuereinheit des Motors ein entsprechendes elektrisches Signal, das die Gaspedalstellung darstellt, eingespielt.

Der Lastzustand auf dem Prüfstand während des Prüfstandslaufs kann auch direkt als digitales Signal in das Fahrzeugbussystem und/oder das Motorsteuergerät eingespeist werden.

Durch die Verwendung eines elektrischen Gaspedalsimulators und/oder durch das Einspeisen des Lastzustands als digitales Signal in das Fahrzeugbussystem und/oder in das Motorsteuergerät kann einerseits der mechanische Aufwand reduziert werden und andererseits ein hochgenaues Einsteuern sichergestellt werden.

Weiterhin kann während des Prüfstandslaufs auf eine Kupplungsbetätigung und eine Schaltstufeneinstellung des Getriebes durch einen Fahrroboter automatisiert erfolgen. Dadurch kann der vorher aufgezeichnete Kraftfahrzeug-Straßentest mit allen Randbedingungen simuliert werden.

Anstatt des Fahrroboters kann natürlich auch ein entsprechendes digitales Signal in das Fahrzeugbussystem und/oder das Motorsteuergerät eingespeist werden.

Darüber hinaus können die aufgezeichneten Messwerte auch in ein HIL-Simulationssystem eingebracht werden.

Weiterhin können die während des Straßentests aufgezeichneten Temperaturen der Abgasanlage beim Prüfstandslauf durch gezielte Kühlluftsteuerung bzw. -einstellung an die bzw. für die Abgasanlage eingestellt werden. Die Signale für die Temperaturen der Abgasanlage können beispielsweise aus dem Bussystem des Fahrzeugs entnommen werden. Hier kann es sich beispielsweise um eine Katalysatortemperatur handeln. Es ist auch, zusätzlich oder alternativ, möglich, externe Sensoren zu verwenden, die entsprechende Temperaturen der Abgasanlage aufzeichnen. Durch eine Berücksichtigung dieser Temperaturen können Einflüsse beispielsweise aufgrund einer Regenfahrt oder einer Fahrt bei sehr kalten Temperaturen auf die aufgezeichneten Abgaswerte bei dem Kraftfahrzeug-Straßentest berücksichtigt werden.

Zusammenfassend erlaubt die Erfindung eine hochgenaue Simulation des Kraftfahrzeug-Straßentests auf Prüfständen, wodurch eine hochgradig reproduzierbare Testumgebung realisiert werden kann. Dadurch ist es möglich, sämtliche Komponenten, die das Emissionsverhalten beeinflussen, gezielt und reproduzierbar zu untersuchen.

Im Folgenden werden verschiedene Beispiele des erfindungsgemäßen Verfahrens exemplarisch mit Bezug auf die beigefügten, schematischen Zeichnungen beschrieben. Es zeigen:

**Figur 1:** einen derzeit in Europa noch gültigen Fahrzyklus gemäß NEFZ;

**Figur 2:** einen in Zukunft gültigen Fahrzyklus gemäß WLTP Klasse 3;

**Figur 3:** die stufenweise Absenkung der zulässigen Abgase von EURO 1 bis EURO 6;

**Figur 4:** aufgezeichnete GPS-Höhendaten während eines Straßentests gemäß dem Stand der Technik; und

**Figur 5:** einen 3D-Plot der Sollwerte für den Prüfstandslauf.

In der Figur 1 ist ein Fahrzyklus gemäß den NEFZ-Vorgaben dargestellt. NEFZ steht für "neuer europäischer Fahrzyklus".

Hierbei ist die Fahrgeschwindigkeit über eine Zeitdauer von 1.200 Sekunden vorgegeben.

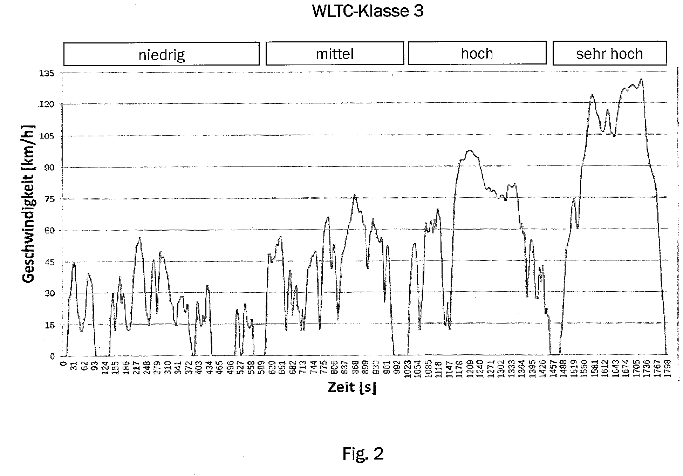

In der Figur 2 ist ein Fahrzyklus gemäß den WLTP-Vorgaben dargestellt. WLTP steht für "Worldwide Harmonized Light Duty Test Procedure". Während der vorgegebenen Testzeit ist eine bestimmte Fahrgeschwindigkeit vorgegeben. Die Testdauer ist hierbei länger und dynamischer verglichen mit dem NEFZ, da deutlich mehr Beschleunigungs- und Bremsvorgänge enthalten sind.

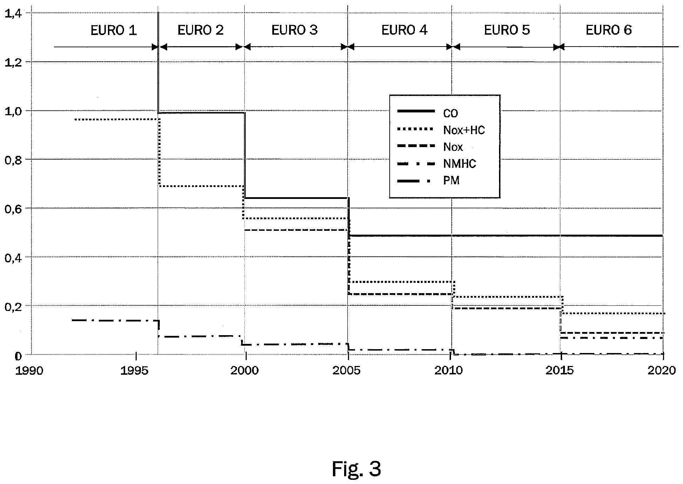

Die Figur 3 zeigt die Verschärfung der Abgasvorschriften gemäß den entsprechenden EURO-Normen von EURO 1 bis EURO 6.

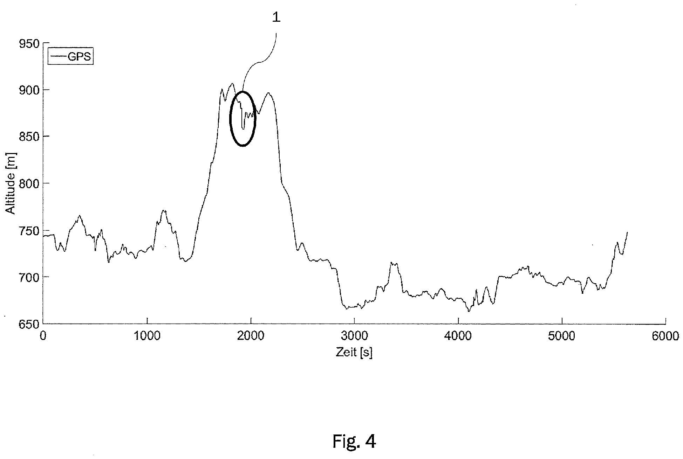

Die Figur 4 zeigt eine aufgezeichnete GPS-Höhe während einer Testfahrt über eine bestimmte Zeitdauer. Hierbei ist deutlich zu erkennen, dass beispielsweise in einem eingekreisten Bereich 1 eine ungewöhnliche Abweichung der aufgezeichneten Höhe dargestellt ist. Dies kann auf eine fehlerhafte GPS-Erfassung zurückgeführt werden, was wiederum zu einer fehlerhaften Simulation auf dem Prüfstand führt, wenn die GPS-Höhe als Datenbasis verwendet werden würde, um den Kraftfahrzeug-Straßentest auf dem Rollenprüfstand zu simulieren.

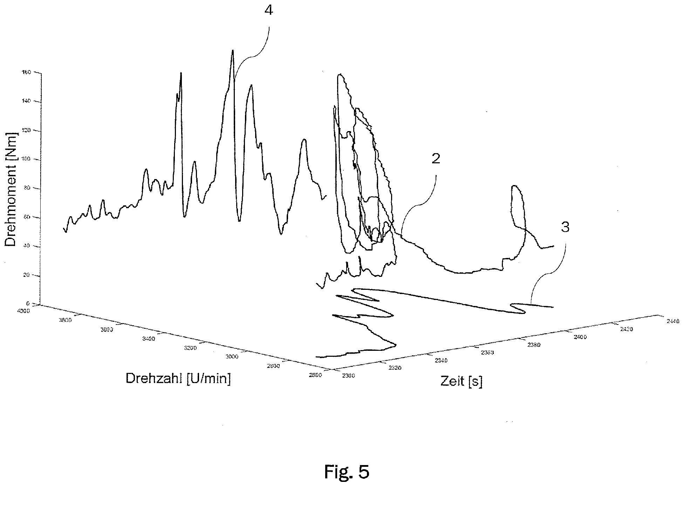

Die Figur 5 zeigt ein Beispiel eines 3D-Plots der Sollwerte für den Prüfstandslauf. Hierbei ist auf der x-Achse eine Drehzahl, auf der Y-Achse ein Drehmoment und auf der Z-Achse die Zeit dargestellt. Die anzusteuernden Werte für den Prüfstandslauf sind in der Kurve 2 dargestellt. Die Kurve 3 ist ein Schatten der Kurve 2 in der XZ-Ebene und die Kurve 4 ist ein Schatten der Kurve 2 in der XY-Ebene.

In diesem Beispiel entspricht das Drehmoment dem Lastzustand bzw. Lastzustandsverlauf, der dem Kraftfahrzeug bzw. dem Antriebsmotor beim Prüfstandslauf als Sollwert über die Zeit vorgegeben wird. Dieses Soll-Drehmoment wird durch das Kraftfahrzeug bspw. über eine Gaspedalstellung eingestellt. Natürlich sind auch andere Möglichkeiten denkbar, bspw. über E-Gas oder eine direkte Einsteuerung in die ECU des Antriebsmotors. Synchron bzw. zeitsynchron dazu wird dem Prüfstand ein Wert vorgegeben, der zur Erreichung einer Soll-Drehzahl bzw. eines Soll-Drehzahlverlaufs des Antriebsmotors führt. Bei einem Rollenprüfstand würde die Rollendrehzahl entsprechend eingestellt werden, wobei dies dann über die Räder des Fahrzeugs und einer entsprechend durch eine Prüfstandsteuerung bzw. Prüfstandslaufsteuerung eingestellten Fahrstufe des Getriebes des Fahrzeugs zu der entsprechenden Soll-Drehzahl des Antriebsmotors führt.

Die Erfindung erlaubt daher eine hochgenaue Simulation des Kraftfahrzeug-Straßentests auf Prüfständen, wodurch eine hochgradig reproduzierbare Testumgebung realisiert werden kann. Dadurch ist es möglich, sämtliche Komponenten, die das Emissionsverhalten beeinflussen, gezielt und reproduzierbar zu untersuchen.

## Patentansprüche

1. Verfahren zum Simulieren von Kraftfahrzeug-Straßentests auf Rollenprüfstände (Road to Lab), (insbesondere von Straßentests die im Rahmen der RDE-Verordnung vorgeschrieben sind) mit den Schritten:

   - Aufzeichnen von Messwerten des Kraftfahrzeugs, enthaltend zumindest einen die Geschwindigkeit des Kraftfahrzeugs repräsentierenden Wert, über eine vorbestimmte Zeitdauer während des Straßentests,
   - Ermitteln eines Lastzustands des Antriebsmotors über die vorbestimmte Zeitdauer,
   - Durchführen des Prüfstandslaufs zum Simulieren des Kraftfahrzeug-Straßentests derart, dass als Sollwerte für den Prüfstandslauf der ermittelte Lastzustand dem Kraftfahrzeug und der die Geschwindigkeit während des Straßentests repräsentierende Wert dem Prüfstand vorgegeben (eingeprägt) werden.

2. Verfahren zum Simulieren von Kraftfahrzeug-Straßentests auf Antriebsstrangprüfständen und/oder Motorprüfständen, (insbesondere von Straßentests die im Rahmen der RDE-Verordnung vorgeschrieben sind) mit den Schritten:

   - Aufzeichnen von Messwerten des Kraftfahrzeugs, enthaltend zumindest einen die Motordrehzahl des Antriebsmotors repräsentierenden Wert, über eine vorbestimmte Zeitdauer während des Straßentests,
   - Ermitteln eines Lastzustands des Antriebsmotors über die vorbestimmte Zeitdauer,
   - Durchführen des Prüfstandslaufs zum Simulieren des Kraftfahrzeug-Straßentests derart, dass als Sollwerte für den Prüfstandslauf der ermittelte Lastzustand dem Antriebsmotor und der die Motordrehzahl während des Straßentests repräsentierende Wert dem Prüfstand vorgegeben (eingeprägt) werden.

3. Verfahren nach Anspruch 1, wobei die Messwerte zumindest die Geschwindigkeit des Kraftfahrzeugs enthalten und die Geschwindigkeit dem Prüfstand während des Prüfstandlaufs vorgegeben (eingeprägt) wird.

4. Verfahren nach Anspruch 2, wobei die Messwerte zumindest die Motordrehzahl des Antriebsmotors enthalten und die Motordrehzahl dem Prüfstand während des Prüfstandslaufs vorgegeben (eingeprägt) wird.

5. Verfahren nach Anspruch 1 oder 2, wobei während des Prüfstandslaufs die aufgezeichnete Geschwindigkeit des Kraftfahrzeugs oder die aufgezeichnete Motordrehzahl synchron mit dem ermittelten Lastzustand eingestellt werden.

6. Verfahren nach zumindest einem der Ansprüche 1 - 5, wobei die Messwerte eine Geschwindigkeit des Kraftfahrzeugs, eine Motordrehzahl eines Antriebsmotors, die Schaltstufe eines Getriebes, eine Gaspedalstellung, eine Drosselklappenstellung, einen Kraftstoffdurchsatz eine Temperatur der Abgasanlage und/oder einen Einlassluftdurchsatz des Antriebsmotors enthalten.

7. Verfahren nach Anspruch 6, wobei der Lastzustand mittels der Gaspedalstellung, der Drosselklappenstellung, dem Kraftstoffdurchsatz und/oder dem Einlassluftdurchsatzes des Antriebsmotors ermittelt wird.

8. Verfahren nach Anspruch 6, wobei der Lastzustand über ein Motordrehmoment ermittelt wird, wobei das Motordrehmoment über den Kraftstoffdurchsatz und/oder den Einlassluftdurchsatzes des Antriebsmotors ermittelt wird.

9. Verfahren nach zumindest einem der Ansprüche 1 - 8, wobei die Messwerte einem Fahrzeugbussystem und/oder einem Motorsteuergerät entnommen und in einem Speicher aufgezeichnet werden.

10. Verfahren nach zumindest einem der Ansprüche 1 - 9, wobei der Lastzustand auf dem Prüfstand während des Prüfstandslaufs durch einen Fahrroboter eingesteuert wird.

**11.** Verfahren nach zumindest einem der Ansprüche 1 - 10, wobei der Lastzustand auf dem Prüfstand während des Prüfstandsiaufs durch einen Gaspedalsteller eingesteuert wird.

**12.** Verfahren nach zumindest einem der Ansprüche 1 - 10, wobei der Lastzustand auf dem Prüfstand während des Prüfstandslaufs durch einen elektrischen Gaspedalsimulator vorgegeben wird.

**13.** Verfahren nach zumindest einem der Ansprüche 9 - 11, wobei der Lastzustand auf dem Prüfstand während des Prüfstandslaufs direkt als digitales Signal in das Fahrzeugbussystem und/oder das Motorsteuergerät eingespeist wird.

**14.** Verfahren nach zumindest einem der Ansprüche 1 -13, wobei während des Prüfstandslaufs eine Kupplungsbetätigung und eine Schaltstufeneinstellung des Getriebes durch einen Fahrroboter automatisiert erfolgt.

**15.** Verfahren nach zumindest einem der Ansprüche 1 -14, wobei die aufgezeichneten Messwerte in ein HIL-Simulationssystem eingebracht werden.

**16.** Verfahren nach zumindest einem der Ansprüche 1 - 15, wobei die während des Straßentests aufgezeichneten Temperaturen der Abgasanlage beim Prüfstandslauf durch gezielte Kühlluftsteuerung bzw. -einstellung an die bzw. für die Abgasanlage eingestellt werden.

## NEFZ (Energieverbrauch gemäß RL 70/220/EWG)

Fig. 1

7

WLTC-Klasse 3

Fig. 2

Fig. 3

Fig. 4

Fig. 5

Europäisches
Patentamt

European
Patent Office

Office européen
des brevets

**EUROPÄISCHER RECHERCHENBERICHT**

Nummer der Anmeldung

EP 17 20 4253

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2015/332522 A1 (KOMADA MINEYUKI [JP] ET AL) 19. November 2015 (2015-11-19) <br> * Abbildungen 1-2 * <br> * Absatz [0002] * <br> * Absatz [0028] * <br> * Absatz [0040] * <br> * Absatz [0042] - Absatz [0044] * <br> * Absatz [0004] * <br> * Absatz [0079] * <br> * Absatz [0026] * <br> * Absatz [0077] * <br> * Absatz [0054] - Absatz [0056] * <br> * Absatz [0059] * <br> * Absatz [0084] * <br> ----- | 1-16 | INV. <br> G01M15/02 <br> G01M17/007 |
| X | WO 2016/143491 A1 (HORIBA LTD [JP]) 15. September 2016 (2016-09-15) <br> * Zusammenfassung * <br> ----- | 1-16 | |
| | | | **RECHERCHIERTE SACHGEBIETE (IPC)** <br><br> G01M |

Der vorliegende Recherchenbericht wurde für alle Patentansprüche erstellt

| Recherchenort | Abschlußdatum der Recherche | Prüfer |
|---|---|---|
| Den Haag | 18. Mai 2018 | Keita, Mamadou |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 20 4253

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-05-2018

| Im Recherchenbericht angeführtes Patentdokument | Datum der Veröffentlichung | Mitglied(er) der Patentfamilie | Datum der Veröffentlichung |
|---|---|---|---|
| US 2015332522 A1 | 19-11-2015 | CN 105092259 A<br>EP 2947447 A1<br>JP 2016001172 A<br>KR 20150133135 A<br>US 2015332522 A1 | 25-11-2015<br>25-11-2015<br>07-01-2016<br>27-11-2015<br>19-11-2015 |
| WO 2016143491 A1 | 15-09-2016 | EP 3270136 A1<br>JP WO2016143491 A1<br>US 2018033217 A1<br>WO 2016143491 A1 | 17-01-2018<br>21-12-2017<br>01-02-2018<br>15-09-2016 |

EPO FORM P0461

Für nähere Einzelheiten zu diesem Anhang : siehe Amtsblatt des Europäischen Patentamts, Nr.12/82